# FASCICULE DE BREVET EUROPEEN

(11) **EP 2 948 718 B1**
(45) Date de publication et mention de la délivrance du brevet: **05.06.2019**
(21) Numéro de dépôt: 14701510.1
(22) Date de dépôt: 21.01.2014
(51) Int. Cl.: F22B 1/00, F24S 40/52, F24S 50/20, F24S 50/40, F24S 20/20, F24S 30/425, F24S 23/70, F24S 23/77

(54) **CENTRALE SOLAIRE A CONCENTRATION DE TYPE FRESNEL A MAITRISE AMELIOREE DE LA TEMPERATURE DE LA VAPEUR EN SORTIE**
SONNENKONZENTRATORKRAFTWERK MIT FRESNEL-LINSEN UND MIT VERBESSERTER STEUERUNG DER AUSTRITTSDAMPFTEMPERATUR
SOLAR CONCENTRATOR POWER STATION OF THE FRESNEL TYPE WITH IMPROVED CONTROL OF THE OUTLET STEAM TEMPERATURE

(30) Priorité: 22.01.2013 FR 1350539
(43) Date de publication de la demande: 02.12.2015
(73) Titulaire: Commissariat à l'Énergie Atomique et aux Énergies Alternatives, 75015 Paris (FR)
(72) Inventeur: RODAT, Sylvain, F-12630 Gages (FR); VUILLERME, Valéry, F-73420 Viviers-du-Lac (FR)
(74) Mandataire: Brevalex
(86) Numéro de dépôt international: PCT/EP2014/051094
(87) Numéro de publication internationale: WO 2014/114624

(56) Documents cités:
- WO-A2-2011/064718
- US-A1- 2009 217 921
- US-A1- 2009 250 052

## Description

### DOMAINE TECHNIQUE ET ART ANTÉRIEUR

La présente invention se rapporte à une centrale solaire à concentration de type Fresnel à génération directe de vapeur, offrant une maîtrise améliorée de la température en sortie.

Une centrale solaire à concentration de type Fresnel comporte un récepteur muni d'un ou plusieurs tubes dans lequel circule un fluide, le récepteur étant suspendu au dessus de miroirs plans qui réfléchissent les rayons lumineux sur le récepteur, ce qui a pour effet d'échauffer le fluide.

Une centrale solaire à concentration de type Fresnel peut être associée à des moyens de conversion thermodynamique qui sont par exemple des turbines à vapeur. Pour cela, le fluide sortant du récepteur est sous forme de vapeur surchauffée ou de vapeur saturée.

Afin d'assurer un fonctionnement optimal de la turbine, la température de la vapeur sortant du récepteur doit correspondre à la température nominale de fonctionnement de la turbine. Cela implique donc de contrôler la température de la vapeur.

Comme indiqué ci-dessus, les récepteurs comportent un ou plusieurs conduits parallèles dans lesquels circule le fluide. A l'entrée du récepteur, le fluide est sous forme liquide, il se vaporise en circulant dans le ou les conduits et sort du récepteur sous forme de vapeur surchauffée ou saturée. Les miroirs sont montés mobiles sur un châssis et des moyens déplacent les miroirs pour leur permettre de suivre le déplacement du soleil au cours de la journée. Dan le cas de vapeur surchauffée, chaque conduit comporte une section ou portion de vaporisation dans laquelle le fluide est vaporisé et une section de surchauffe en aval de la section de vaporisation dans laquelle le fluide vaporisé est surchauffé. Il existe également des centrales solaires à concentration de type tour comportant plusieurs récepteurs, disposés parallèlement l'un par rapport à l'autre et comportant des miroirs qui sont déplacés en fonction de certains paramètres, voir par exemple "Review and Comparison of Différent Solar Energy Technologies" publié par le Global Energy Network Institute en aôut 2011, l'auteur étant Yinghao Chu.

Le document US 6 131 565 décrit une centrale solaire de type Fresnel comportant plusieurs récepteurs disposés parallèlement les uns aux autres et suspendus aux dessus de miroirs. Une partie des miroirs est orientée de sorte à n'éclairer que l'un des récepteurs et une autre partie des miroirs peut être orientées de sorte à éclairer l'un ou l'autre des récepteurs, afin de minimiser l'ombrage.

Le suivi du rendement des récepteurs, qui exprime la part du flux incident effectivement absorbé par le fluide caloporteur, permet de surveiller le bon fonctionnement de la centrale. Ce rendement est principalement fonction de la valeur du flux incident, de la température de fonctionnement, des propriétés des matériaux et de l'encrassement des surfaces constitutives des miroirs et de toutes celles soumises au rayonnement.

Ce rendement varie au cours du temps à moyen et long termes, par exemple du fait de la dégradation progressive des performances d'un récepteur par rapport à un autre. Une telle dégradation peut provoquer une baisse de l'énergie transmise dans la zone de surchauffe, il en résulte une vapeur dont la température est inférieure à la température nominale de la turbine.

Or, dans les centrales solaires à concentration de type Fresnel à génération directe de vapeur en mode recirculation, le champ solaire est dimensionné afin d'obtenir la longueur de la section ou portion de vaporisation et la longueur de la section ou portion de surchauffe permettant d'atteindre la consigne nominale en température, en pression et en débit de vapeur. La longueur de la section d'évaporation détermine le débit de vapeur produit, la longueur de la section de surchauffe fixe la température de vapeur en sortie du récepteur. Le dimensionnement est réalisé pour des conditions données. En dehors du point nominal, le débit de vapeur produit ou la température à laquelle la vapeur sort diffère, par exemple si le flux solaire sur le récepteur diffère du flux nominal. Par exemple, si le flux sur le récepteur est diminué par rapport au flux nominal, le rendement de la portion de surchauffe sera plus affecté que le rendement de la portion de vaporisation du fait du niveau de température requis relativement plus élevé sur la portion de surchauffe. Dans ce cas, la portion de surchauffe est sous-dimensionnée et la température de consigne de la vapeur en sortie du récepteur ne pourra être atteinte. La dégradation des performances de l'un ou l'autre des récepteurs peut être due au vieillissement et/ou aux salissures.

Or, afin d'assurer un fonctionnement optimal du système utilisant la vapeur produite par la centrale, par exemple une turbine, il est important de maintenir la température de la vapeur en sortie de la centrale proche de la température nominale.

Une solution pour pallier ce problème serait de surdimensionner les portions de vaporisation et de surchauffe, en ajoutant une longueur de récepteur à l'une et/ou l'autre des sections et des miroirs supplémentaires. Les miroirs supplémentaires sont alors focalisés sur la ou les sections concernées en cas de nécessité, sinon ceux-ci sont défocalisés par exemple en pointant alors vers le bas. Ce surdimensionnement permet de pallier les déséquilibres. Cependant, il a un coût relativement important et une partie de l'énergie qui pourrait être récupérée est perdue du fait de la défocalisation des miroirs.

### EXPOSÉ DE L'INVENTION

C'est par conséquent un but de la présente invention d'offrir une centrale solaire à concentration de type Fresnel dont le fonctionnement permet de délivrer une vapeur à une température maîtrisée en maximisant le taux d'utilisation de la surface des miroirs.

Le but de la présente invention est atteint par une centrale solaire à concentration de type Fresnel comportant au moins deux récepteurs disposés parallèlement l'un par rapport à l'autre et des miroirs réfléchissant les rayons lumineux sur les récepteurs. Le premier récepteur est destiné à la vaporisation du fluide et le deuxième récepteur est destiné à surchauffer la vapeur produite par le premier récepteur, le deuxième récepteur est donc connecté en sortie du premier récepteur. La centrale comporte des moyens de commande du déplacement d'au moins une partie des miroirs de sorte à orienter ceux-ci vers l'un ou l'autre des récepteurs en fonction de l'état de fonctionnement de la centrale.

Ainsi, en modifiant la focalisation des miroirs vers l'un ou l'autre des récepteurs, il est possible de compenser l'évolution différentielle des rendements des récepteurs au cours du temps et de rééquilibrer l'ensemble de la centrale.

En d'autres termes, on utilise, dans une centrale solaire à concentration de type Fresnel comportant au moins un récepteur de vaporisation et au moins un récepteur de surchauffe, au moins une partie des miroirs du récepteur qui se trouve en surplus d'énergie pour renvoyer l'énergie sur le récepteur voisin. Ainsi, on peut rééquilibrer le récepteur de vaporisation et de surchauffe sans diminuer le taux d'utilisation de la surface des miroirs.

Ainsi, grâce l'invention, on optimise le taux d'utilisation de l'ensemble des miroirs mis en oeuvre dans la centrale lors de son fonctionnement contrairement aux centrales solaires de l'état de la technique dans lesquelles une partie des miroirs serait défocalisée et donc non utilisée.

Par exemple, dans le cas d'une baisse de performance du récepteur de surchauffe, i.e. la température de la vapeur est inférieure à la température nominale, il est possible d'orienter des miroirs initialement dédiés à l'illumination du récepteur de vaporisation vers le récepteur de surchauffe. Ainsi la quantité de vapeur produite est réduite, il est alors possible de la surchauffer avec moins d'énergie. En effet, du fait de la focalisation des miroirs, plus d'énergie est apportée au récepteur de surchauffe ce qui permet de compenser la baisse de performance du récepteur de surchauffe.

De manière avantageuse, il est possible également d'accélérer la phase de démarrage de la centrale en orientant tout ou partie des miroirs initialement dédiés au récepteur de surchauffe à l'éclairement du récepteur de vaporisation. Ainsi une montée en température du fluide est obtenue plus rapidement que dans les centrales de l'état de la technique. Il est également possible d'absorber les variations de température du fluide sortant de la turbine.

Dans le cas où la centrale comporte plusieurs récepteurs de vaporisation, des miroirs peuvent être commandés pour changer de récepteur de vaporisation.

La présente invention a alors pour objet une centrale solaire à concentration de type Fresnel comportant au moins un module élémentaire comprenant au moins un premier récepteur et au moins un deuxième récepteur disposés parallèlement l'un par rapport à l'autre et directement adjacents, et des miroirs destinés à réfléchir un flux solaire concentré sur lesdits premier et deuxième récepteurs, lesdits premier et deuxième récepteurs étant suspendus aux dessus des miroirs, chacun desdits premier et deuxième récepteurs comportant au moins un conduit dans lequel un fluide est destiné à circuler, lesdits conduits étant destinés recevoir le flux solaire concentré réfléchi, lesdits miroirs comportant des premiers miroirs focalisés sur le premier récepteur en fonctionnement nominal et les deuxièmes miroirs étant focalisés sur le deuxième récepteur en fonctionnement nominal, des moyens de déplacement des miroirs, des premiers moyens de commande des moyens de déplacement actionnant les moyens de déplacement des miroirs en fonction de l'heure de la journée, dans laquelle le premier récepteur, dit récepteur de vaporisation, est connecté à une alimentation en fluide en phase liquide, et dans laquelle le deuxième récepteur, dit récepteur de surchauffe, est alimenté en fluide sous forme vapeur par le premier récepteur, ledit deuxième récepteur étant destiné à délivrer de la vapeur surchauffée, ladite centrale comportant également des moyens de mesure d'au moins un paramètre de fonctionnement de la centrale, des deuxièmes moyens de commande des moyens de déplacement, lesdits deuxièmes moyens de commande actionnant les moyens de déplacement en fonction d'au moins un paramètre de fonctionnement de la centrale de sorte qu'au moins un miroir soit focalisé sur un récepteur différent de celui sur lequel il est focalisé en fonctionnement nominal.

De manière préférée, la température de la vapeur en sortie du récepteur de surchauffe est un des paramètres de fonctionnement de la centrale.

La centrale solaire peut comporter au moins deux récepteurs de vaporisation disposés de part et d'autre du récepteur de surchauffe, les deux récepteurs de vaporisation étant connectés en parallèle à une alimentation en fluide liquide et alimentant le récepteur de vaporisation, les deuxièmes moyens de commande étant aptes à focaliser une partie des deuxièmes miroirs sur l'un des récepteurs de vaporisation et une partie des premiers miroirs sur l'autre récepteur de vaporisation.

Avantageusement, les deuxièmes moyens de commande sont aptes à focaliser au moins une partie des premiers miroirs focalisés sur l'un des récepteurs de vaporisation vers l'autre récepteur de vaporisation.

Par exemple, la centrale solaire peut comporter des lignes de miroirs parallèles s'étendant sur tout la longueur de la centrale, les moyens de déplacement étant tels que les miroirs d'une même ligne sont déplacés simultanément par les premiers moyens de commande ou les deuxièmes moyens de commande.

La centrale solaire peut comporter des moyens de séparation liquide-vapeur connectant la sortie d'au moins un récepteur de vaporisation et le récepteur de surchauffe.

Dans un exemple de réalisation, la centrale solaire peut comporter une pluralité de modules élémentaires juxtaposés, chaque module élémentaire comportant un récepteur de surchauffe et n récepteurs de vaporisation, n étant égal à au moins 1.

Chaque module élémentaire peut comporter un récepteur de surchauffe et 2, 3, ou plus récepteurs de vaporisation répartis de part de d'autre du récepteur de surchauffe.

La présente invention a également pour objet un ensemble de production d'électricité comportant une centrale solaire selon la présente invention et une turbine à vapeur alimentée en vapeur par le ou les récepteurs de surchauffe et alimentant en fluide en phase liquide le ou les récepteurs de vaporisation.

La présente invention a également pour objet un procédé de commande de fonctionnement d'une centrale solaire à concentration de type Fresnel selon la présente invention, comportant les étapes :
- mesure d'au moins un paramètre de fonctionnement de la centrale,
- déplacement d'au moins un miroir de sorte qu'il soit focalisé sur un récepteur différent de celui sur lequel il est focalisé en fonctionnement nominal lorsque le paramètre de fonctionnement de la centrale diffère du paramètre de fonctionnement correspondant en fonctionnement nominal.

Le paramètre de fonctionnement est avantageusement la température de la vapeur en sortie du deuxième récepteur.

De préférence, en phase de démarrage, au moins l'un des deuxièmes miroirs, est focalisé sur au moins un récepteur de vaporisation.

Dans le cas où la centrale comporte au moins un deuxième récepteur de vaporisation, disposé de manière directement adjacente au premier récepteur de surchauffe, le procédé de commande peut comporter en phase de démarrage une étape de focalisation sur le deuxième récepteur de vaporisation d'au moins un premier miroir, qui est focalisé sur le premier récepteur de vaporisation en fonctionnement nominal.

De préférence, lorsque la température de la vapeur en sortie du récepteur de surchauffe est inférieure à une température nominale, au moins un des premiers miroirs est focalisé sur le récepteur de surchauffe.

### BRÈVE DESCRIPTION DES DESSINS

La présente invention sera mieux comprise à l'aide de la description qui va suivre et des dessins en annexes sur lesquels :
- la figure 1 est un schéma de principe du circuit de connexion des récepteurs d'un centrale solaire de type Fresnel selon l'invention,
- les figures 2A à 2C sont des vues en coupes partielles représentées schématiquement de la centrale solaire à concentration de la figure 1 dans différents états de focalisation des miroirs,
- la figure 3 est une représentation schématique partielle d'un autre exemple de centrale solaire à concentration avec quatre récepteurs de vaporisation et un récepteur de surchauffe selon l'invention dans une phase de démarrage de la centrale.

### EXPOSÉ DÉTAILLÉ DE MODES DE RÉALISATION PARTICULIERS

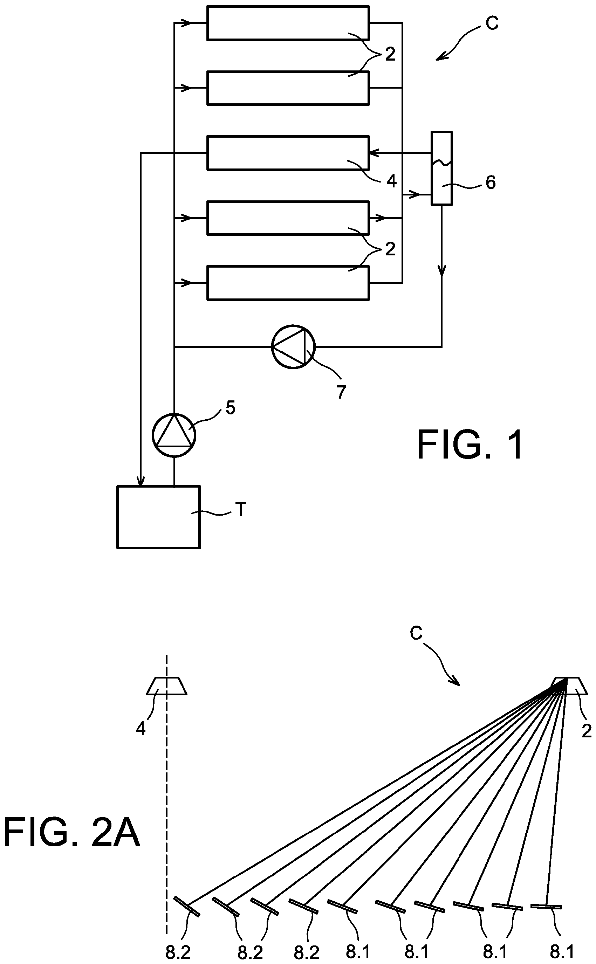

Sur la figure 1, on peut voir un schéma de principe d'une centrale C solaire à concentration de type Fresnel selon l'invention, désignée "centrale" dans la suite de la description. Selon la présente invention, la centrale solaire comporte un ou plusieurs récepteurs de vaporisation 2 et au moins un récepteur de surchauffe 4, le ou les récepteurs de vaporisation étant distincts du ou des récepteur de surchauffe.

Les récepteurs de vaporisation 2 sont connectés en entrée à une alimentation en fluide à l'état liquide. Il peut s'agir par exemple d'eau. A des fins de simplicité, nous considérerons l'eau comme le fluide vaporisé et surchauffé dans la centrale. Tout autre fluide pouvant être surchauffé peut convenir, comme par exemple II le 1,1,1,3,3-Pentafluoropropane (HFC-245fa ou R245fa) utilisé dans les cycles de Rankine organiques.

Dans l'exemple représenté, la centrale C est destinée à alimenter une turbine à vapeur T. L'eau sous forme liquide provient alors de la sortie de la turbine après un cycle de conversion thermodynamique. Une pompe d'alimentation 5 est prévue pour faire circuler l'eau dans les récepteurs de vaporisation 2. Les récepteurs d'évaporation 2 sont alimentés en parallèle.

Le récepteur de surchauffe 4 est connecté en sortie des récepteurs de vaporisation 2 par l'intermédiaire de moyens de séparation de l'eau liquide de la vapeur saturée sortant des récepteurs de vaporisation 2, de sorte à n'alimenter le récepteur de surchauffe 4 qu'avec de l'eau sous forme vapeur. Les moyens de séparation sont par exemple formés par un ballon séparateur 6. La sortie du récepteur de surchauffe 4 est connectée à l'entrée de la turbine 4. Une pompe de recirculation 7 est également prévue pour renvoyer l'eau liquide séparée par le ballon 6 en entrée des récepteurs de vaporisation 2.

On peut par exemple associer 2, 3, 4 récepteurs de vaporisation et même au-delà de 4 récepteurs de vaporisation à un récepteur de surchauffe. En associant plusieurs récepteurs de vaporisation à un récepteur de surchauffe, le débit de vapeur obtenu est plus important dans le récepteur de surchauffe, ce qui favorise les coefficients d'échange. Le récepteur de surchauffe 4 et les récepteurs de vaporisation sont disposés parallèlement les uns à côtés des autres. Et de préférence, les récepteurs de vaporisation et de surchauffe présentent des longueurs égales ou proches. Ainsi le même miroir peut être focalisé soit sur un récepteur de surchauffe, soit sur un récepteur de vaporisation et éclairé entièrement l'un ou l'autre des récepteur.

La disposition de la figure 1 permet à la fois d'optimiser l'occupation du sol, en choisissant des récepteurs de vaporisation et de surchauffe de même longueur ou de longueur proche, et d'assurer une production suffisante de vapeur en connectant plusieurs récepteurs de vaporisation, de préférence quatre récepteurs de vaporisation, à un récepteur de surchauffe, puisque plus d'énergie est requise pour la phase de vaporisation que pour la phase de surchauffe. Au contraire, dans les centrales solaires de type Fresnel de l'état de la technique, un même récepteur assure la production de la vapeur puis la surchauffe de la vapeur, l'occupation du sol n'est pas optimisé. Par ailleurs, il n'est pas possible de focaliser le ou les miroirs uniquement sur la zone de vaporisation ou sur la zone de surchauffe.

De préférence, les points de distribution et de collecte du fluide froid et chaud sont situés du même côté du module afin de limiter la longueur de canalisation. Les récepteurs de vaporisation et de surchauffe ont des structures similaires. Ils comportent un absorbeur qui reçoit le flux solaire sur sa face inférieure et dans lequel circule le fluide, l'absorbeur peut être formé par exemple d'un ou plusieurs tubes juxtaposés dans lesquels circule le fluide. Ils peuvent éventuellement comporter une couche d'un matériau isolant thermique permettant de limiter les pertes thermiques depuis l'absorbeur vers l'extérieur, et/ou éventuellement un panneau vitré permettant d'isoler l'absorbeur du milieu extérieur en délimitant une cavité fermée entre l'absorbeur et la vitre.

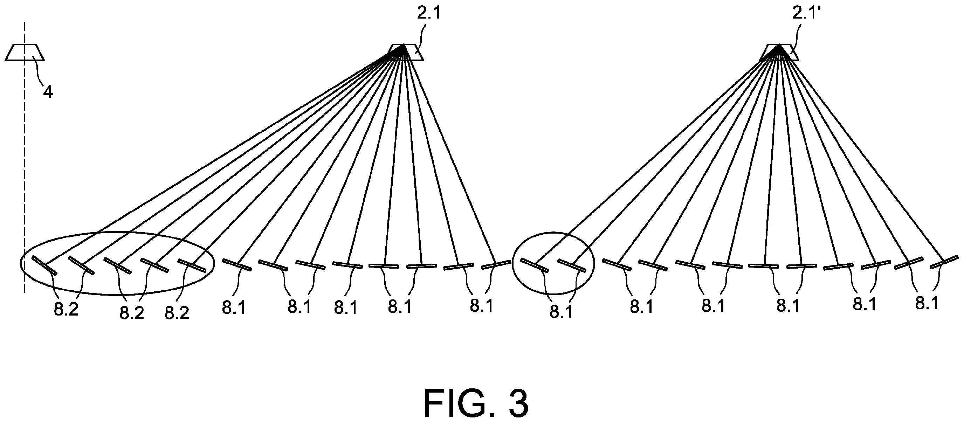

Sur les figures 2A à 2C et 3, on peut voir une représentation en coupe schématique partielle de la figure 1. Sur les figures 2A à 2C, un récepteur de vaporisation 2 et un récepteur de surchauffe 4 sont représentés. Sur la figure 3, deux récepteurs de vaporisation 2.1 et 2.1' et une récepteur de surchauffe 4 sont représentés. Les connexions fluidiques entre les récepteurs ne sont pas représentées à des fins de simplicité des figures. L'axe de symétrie des centrales est schématisé par un trait en pointillé.

Comme on peut le voir sur les figures 2A à 2C, le récepteur de vaporisation 2 et le récepteur de surchauffe 4 sont disposés l'un à côté de l'autre et parallèlement l'un par rapport à l'autre. Les récepteurs présentent une très grande longueur, par exemple plusieurs dizaines de mètres, voir plusieurs centaines de mètres.

Ils sont suspendus au-dessus de réflecteurs ou miroirs 8. Les structures de suspension des récepteurs de centrale solaire de type Fresnel sont bien connues de l'homme du métier et ne seront pas décrites en détails. L'entrée du récepteur de surchauffe est connectée en sortie du récepteur de vaporisation par l'intermédiaire d'un ballon de séparation liquide/gaz.

Les miroirs sont répartis en deux groupes, les miroirs 8.1 sont disposés sous le récepteur de vaporisation 2 et sont destinés à réfléchir le flux solaire concentré sur le récepteur de vaporisation dans un fonctionnement de la centrale dans les conditions nominales, et les miroirs 8.2 sont disposés sous le récepteur de surchauffe 4 et sont destinés à réfléchir le flux solaire concentré sur le récepteur de surchauffe 4 dans un fonctionnement de la centrale dans les conditions nominales.

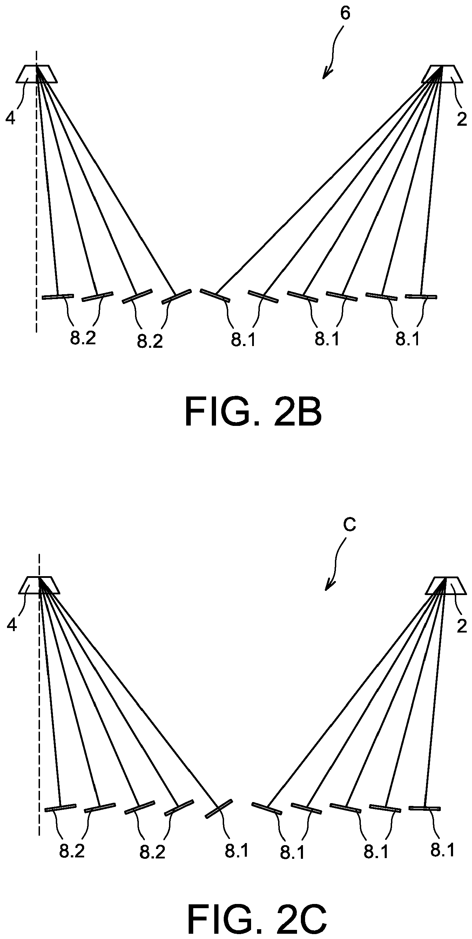

Les miroirs sont répartis en lignes qui s'étendent sur toute la longueur des récepteurs. Dans la représentation des figures 2A à 2C et 3, seul le premier miroir de chaque ligne est visible. Dans l'exemple représenté sur la figure 2B, la centrale comporte 10 lignes de miroirs, dont quatre sont focalisées sur le récepteur de surchauffe et six sont focalisées sur le récepteur d'évaporation en fonctionnement nominal.

Les miroirs 8.1, 8.2 sont montés sur un châssis et sont déplacés par des moyens de déplacement, par exemple des moteurs électriques, de sorte que les miroirs puissent se déplacer au cours de la journée pour optimiser le flux solaire transmis quelle que soit la position du soleil dans le ciel. De préférence, les miroirs de chaque ligne sont solidaires en déplacement. Ils sont par exemple portés par le même châssis actionné par un ou plusieurs moteurs. Ainsi une commande provoque le déplacement de plusieurs miroirs simultanément. Sur une très grande longueur, plusieurs châssis sont prévus. Cette configuration permet de réduire le nombre de moteurs mis en oeuvre et permet un contrôle simplifié de la position des miroirs.

Le déplacement des miroirs est commandé par des premiers moyens de commande qui actionnent les moteurs pour modifier l'orientation des miroirs en fonction de l'heure de la journée. La commande des premiers moyens de commande autorise uniquement une modification de l'orientation des miroirs 8.1 par rapport au récepteur de vaporisation, ceux-ci restant focalisés sur le récepteur de vaporisation, et une modification de l'orientation des miroirs 8.2 par rapport au récepteur de surchauffe, ceux-ci restant focalisés sur le récepteur de surchauffe. On peut envisager que les lignes de miroirs soient commandées individuellement ou par groupe.

La centrale selon l'invention comporte également des deuxièmes moyens de commande destinés à commander les moyens de déplacement d'au moins une partie des lignes de miroirs pour modifier leur orientation de sorte qu'elles soient focalisées sur un autre récepteur que celui sur lequel elles sont focalisées en fonctionnement nominal.

Les deuxièmes moyens de commande actionnent les moyens de déplacement en fonction de données de fonctionnement de la centrale, par exemple en fonction de la qualité de la vapeur en sortie du récepteur de surchauffe, par exemple en fonction de sa température que l'on cherche à maintenir au plus près de la température nominale de la turbine. Le débit en sortie du récepteur de vaporisation, et/ou la pression et/ou flux solaire peuvent également être utilisés comme paramètres de commande. A titre d'exemple, les moyens pour mesurer la température de vapeur sont formés par des sondes platine au contact ou insérées dans les tubes, un pyrhéliomètre est par exemple utilisé pour mesurer l'intensité du rayonnement solaire.

Il sera compris que les premiers et deuxièmes moyens de commande peuvent faire partie de la même unité de commande de la centrale, qui comprend les données de commande des miroirs en fonction de l'heure de la journée et reçoit les signaux émis par les capteurs des paramètres de fonctionnement de la centrale, par exemple le capteur de température de la vapeur surchauffée en sortie du récepteur de surchauffe. Une base de données contient des informations sur les récepteurs à focaliser par chacun des miroirs en fonction de la valeur du ou des paramètres de fonctionnement.

Le fonctionnement de la centrale selon l'invention va maintenant être décrit.

En phase de démarrage, l'eau en phase liquide est à basse température, une grande quantité d'énergie est donc requise. Les deuxièmes moyens de commande focalisent alors les miroirs 8.2 sur le récepteur de vaporisation 4. Ainsi les 10 lignes de miroirs renvoient le flux solaire concentré sur le récepteur de vaporisation comme cela est visible sur la figure 2A. Par exemple, on utilise, comme paramètres de fonctionnement, la température et la pression du ballon séparateur et la mesure de température au sein de la section d'évaporation.

Lorsque la centrale a atteint un état de fonctionnement qui permet de produire une quantité suffisante de vapeur, les deuxièmes moyens de commande modifient l'orientation des lignes de miroirs 8.2 de sorte qu'elles se focalisent sur le récepteur de surchauffe. La centrale suit alors son fonctionnement normal. L'eau liquide est vaporisée dans le récepteur de vaporisation, de préférence dans plusieurs récepteurs de vaporisation, la vapeur est séparée de la phase liquide, la vapeur est envoyée dans le récepteur de surchauffe 4 dans lequel la vapeur est surchauffée. Elle sort à la température nominale et est injectée dans la turbine T. L'eau liquide qui sort de la turbine est renvoyée au récepteur de vaporisation.

Lorsque l'on détecte une diminution du rendement de la section de surchauffe, par exemple due au vieillissement de celle-ci, une telle diminution est détectée en mesurant la température de la vapeur surchauffée qui est alors inférieure à la température nominale.

Dans ce cas, les moyens de commande modifient l'orientation d'une ou plusieurs lignes de miroirs 8.1 de sorte qu'elles soient focalisées sur le récepteur de surchauffe. Dans l'exemple représenté sur la figure 2C, une ligne de miroirs 8.1 est déplacée de sorte à être focalisée sur le récepteur de surchauffe 4. Il en résulte que la quantité d'énergie transmise au récepteur de vaporisation est réduite, le débit de vapeur produite par le récepteur de vaporisation est alors réduit et la quantité d'énergie transmise au récepteur de surchauffe est augmentée, ce qui permet de compenser la baisse de rendement du récepteur de surchauffe. La vapeur sortant du récepteur de surchauffe est de nouveau proche de ou égale à la température nominale.

De préférence et comme cela est schématisé sur la figure 1 et sur la figure 3, la centrale solaire comporte plusieurs récepteurs de vaporisation disposés parallèlement les uns aux autres et un récepteur de surchauffe disposé entre les récepteurs de vaporisation. Sur la figure 1, la centrale comporte quatre récepteurs de vaporisation, deux de part et d'autre du récepteur de surchauffe.

Sur la figure 3, on peut voir une représentation schématique de la centrale sur laquelle seuls deux récepteurs de vaporisation disposés du côté droit dans la représentation de la figure 1 sont représentés. La centrale comporte également de préférence le même nombre de récepteurs de vaporisation sur le côté gauche du récepteur de surchauffe (non représentés).

Sur la figure 3, la centrale solaire est dans une phase de démarrage. Tous les miroirs sont focalisés sur les récepteurs de vaporisation. Aucun miroir 8.2 n'est focalisé sur le récepteur de surchauffe 4, ils sont focalisés sur le récepteur de vaporisation 2.1 (miroirs 8.2 entourés). Afin d'équilibrer la quantité d'énergie transmise aux deux récepteurs de vaporisation 2.1, 2.1', deux miroirs désignés 8.1 (entourés sur la figure 3) focalisés sur le récepteur de vaporisation 2.1 en fonctionnement nominal sont focalisés sur le récepteur de vaporisation 2.1'. Ainsi, dans l'exemple représenté, 13 lignes de miroirs sont focalisées sur le récepteur de vaporisation 2.1 et 12 lignes de miroirs sont focalisés sur le récepteur de vaporisation 2.1'. La même distribution de miroirs peut être faite sur le côté gauche du récepteur de surchauffe.

Un exemple numérique non limitatif va maintenant être donné.

Une installation selon l'invention ayant le point de fonctionnement nominal suivant est considérée :
- Débit nominal : 1 kg/s,
- Pression de travail : 110 Bar,
- Température d'entrée : 200°C,
- Température de sortie : 450°C.

La section d'évaporation formée par un ou plusieurs récepteurs de vaporisation présente :
- un rendement : 0,8
- une largeur de récepteur : 0,3 m
- une longueur de récepteur : 156 m

La section de surchauffe formée par un ou plusieurs récepteurs de surchauffe présente :
- un rendement de la section de surchauffe : 0,7
- une largeur de récepteur : 0,3 m
- une longueur de récepteur : 50 m

Le champ solaire est tel que le flux au récepteur vaut 49,5 kW/m².

Le rendement est égal au rapport puissance transmise à l'eau-vapeur / puissance incidente sur le récepteur
Si suite à un vieillissement du traitement sélectif par exemple, le rendement sur la surchauffe est égal à 0,62 au lieu de 0,7 toutes choses étant égales par ailleurs. Alors, la centrale produira 1 kg/s de vapeur sortant à 430°C au lieu de la température nominale de 450°C. Le débit de vapeur produit par la section d'évaporation ne varie pas, mais la section de surchauffe n'a plus les performances suffisantes sur la surchauffe pour fournir une vapeur à 450°C.

Grâce à l'invention, la puissance incidente sur la section évaporation est réduite en défocalisant une ligne de miroirs de sorte que l'on produise un peu moins de vapeur. Cette ligne de miroirs est focalisée sur la section surchauffe afin de compenser sa dégradation. En modifiant la focalisation d'une ligne de miroirs, moins de puissance est envoyée sur la section évaporation et plus de puissance est envoyée sur la section surchauffe. Ainsi un débit de vapeur de 0,9375 kg/s peut être surchauffé à 450°C. Ainsi grâce à l'invention, la température nominale est atteinte et toute la surface de miroir est utilisée.

Grâce à l'invention, il est possible d'accélérer la phase de démarrage d'une centrale solaire à concentration de type Fresnel, de dépointer certains miroirs de la section de surchauffe en mode régulation lorsqu'une baisse de la température de la vapeur est requise, de modifier la répartition des facteurs de concentration entre la section de vaporisation et la section de surchauffe suite à la dégradation attendue des performances dans le temps de la section de surchauffe et de pallier les variations de température retour turbine en fonctionnement hors nominal, i.e. lorsque l'eau liquide sortant de la turbine et renvoyée en entrée de la centrale est à une température inférieure à la température nominale de l'eau liquide.

On peut envisager qu'une partie des miroirs réfléchissant le flux solaire concentré sur le récepteur de surchauffe soient constamment focalisés sur le récepteur de surchauffe et qu'une partie seulement soit déplacée pour focaliser sur un ou plusieurs récepteurs de vaporisation. Il est à noter que, lorsqu'une ligne de miroirs qui est telle qu'elle peut focaliser sur l'un ou l'autre des récepteurs de vaporisation et de surchauffe, lorsqu'elle est focalisée sur l'un ou l'autre des récepteurs, la ligne est commandée par les premiers moyens de commande et est déplacée en fonction des heures de la journée.

Il sera compris que les nombres de lignes de miroirs mis en oeuvre dans les exemples ne sont que des exemples de réalisation et ne sont en aucun cas limitatifs.

Par exemple dans le cas de la figure 2C où une baisse de la température de la vapeur sortant du récepteur de surchauffe est détectée, le nombre de lignes de miroirs qui sont déplacées pour être focalisés sur le récepteur de surchauffe et non plus sur celui de vaporisation peut dépendre de l'écart entre la température de la vapeur mesurée et la température nominale.

On peut envisager que une ou des lignes de miroirs soient articulées de sorte qu'elles puissent présenter des miroirs dont la focalisation est différente. Par exemple une partie des miroirs serait focalisée sur un récepteur et une autre partie des miroirs seraient focalisée sur un autre récepteur. La centrale présenterait alors une flexibilité encore augmentée.

Le nombre de lignes de miroirs à déplacer peut être déterminé en prévoyant, en phase d'apprentissage lors de l'installation de la centrale, qu'une seule ligne de miroirs à la fois change sa focalisation d'un récepteur de vaporisation/de surchauffe vers un récepteur de surchauffe/de vaporisation respectivement afin de vérifier l'effet de ce changement de focalisation. Il sera compris qu'une centrale comportant plusieurs récepteurs de surchauffe chacun étant au moins disposé directement à côté d'un récepteur de vaporisation de sorte à pouvoir partager des miroirs et une centrale solaire comportant un seul récepteur de vaporisation et un seul récepteur de surchauffe ne sortent pas du cadre de la présente invention.

## Revendications

1. Centrale solaire à concentration de type Fresnel comportant au moins un module élémentaire comprenant au moins un premier récepteur (2) et au moins un deuxième récepteur (4) disposés parallèlement l'un par rapport à l'autre et directement adjacents, et des miroirs (8.1, 8.2) destinés à réfléchir un flux solaire concentré sur lesdits premier (2) et deuxième (4) récepteurs, lesdits premier (2) et deuxième (4) récepteurs étant suspendus aux dessus des miroirs (8.1, 8.2), chacun desdits premier (2) et deuxième (4) récepteurs comportant au moins un conduit dans lequel un fluide est destiné à circuler, lesdits conduits étant destinés recevoir le flux solaire concentré réfléchi, lesdits miroirs (8.1, 8.2) comportant des premiers miroirs (8.1) focalisés sur le premier récepteur (2) en fonctionnement nominal et les deuxièmes miroirs (8.2) étant focalisés sur le deuxième récepteur (4) en fonctionnement nominal, des moyens de déplacement des miroirs, des premiers moyens de commande des moyens de déplacement actionnant les moyens de déplacement des miroirs en fonction de l'heure de la journée, dans laquelle le premier récepteur (2), dit récepteur de vaporisation, est connecté à une alimentation en fluide en phase liquide, et dans laquelle le deuxième récepteur (4), dit récepteur de surchauffe, est alimenté en fluide sous forme vapeur par le premier récepteur (2), ledit deuxième récepteur (4) étant destiné à délivrer de la vapeur surchauffée, ladite centrale comportant également des moyens de mesure d'au moins un paramètre de fonctionnement de la centrale, des deuxièmes moyens de commande des moyens de déplacement, lesdits deuxièmes moyens de commande actionnant les moyens de déplacement en fonction d'au moins un paramètre de fonctionnement de la centrale de sorte qu'au moins un miroir (8.1, 8.2) soit focalisé sur un récepteur (2, 4) différent de celui sur lequel il est focalisé en fonctionnement nominal.

2. Centrale solaire selon la revendication 1, dans lequel la température de la vapeur en sortie du récepteur de surchauffe est un des paramètres de fonctionnement de la centrale.

3. Centrale solaire selon la revendication 1 ou 2, comportant au moins deux récepteurs de vaporisation (2.1; 2.1') disposés de part et d'autre du récepteur de surchauffe (4), les deux récepteurs de vaporisation étant connectés en parallèle à une alimentation en fluide liquide et alimentant le récepteur de vaporisation, les deuxièmes moyens de commande étant aptes à focaliser une partie des deuxièmes miroirs (8.1, 8.1') sur l'un des récepteurs de vaporisation (2.1, 2.1') et une partie des premiers miroirs (8.1, 8.1') sur l'autre récepteur de vaporisation (2.1', 2.1).

4. Centrale solaire selon la revendication 3, dans laquelle les deuxièmes moyens de commande sont aptes à focaliser au moins une partie des premiers miroirs (8.1, 8.1') focalisés sur l'un des récepteurs de vaporisation (2.1, 2.1') vers l'autre récepteur de vaporisation (2.1', 2.1).

5. Centrale solaire selon l'une des revendications 1 à 4, comportant des lignes de miroirs parallèles s'étendant sur tout la longueur de la centrale, les moyens de déplacement étant tels que les miroirs d'une même ligne sont déplacés simultanément par les premiers moyens de commande ou les deuxièmes moyens de commande.

6. Centrale solaire selon l'une des revendications 1 à 5, comportant des moyens de séparation liquide-vapeur (6) connectant la sortie d'au moins un récepteur de vaporisation et le récepteur de surchauffe.

7. Centrale solaire selon l'une des revendications 1 à 6, comportant une pluralité de modules élémentaires juxtaposés, chaque module élémentaire comportant un récepteur de surchauffe et n récepteurs de vaporisation, n étant égal à au moins 1.

8. Centrale solaire selon la revendication 7, dans lequel chaque module élémentaire comporte un récepteur de surchauffe et 2, 3 ou plus récepteurs de vaporisation répartis de part de d'autre du récepteur de surchauffe.

9. Ensemble de production d'électricité comportant une centrale solaire selon l'une des revendications 1 à 8 et une turbine à vapeur (T) alimentée en vapeur par le ou les récepteurs de surchauffe (4) et alimentant en fluide en phase liquide le ou les récepteurs de vaporisation (2, 2.1, 2.1').

10. Procédé de commande de fonctionnement d'une centrale solaire à concentration de type Fresnel selon l'une des revendications 1 à 8, comportant les étapes :
- mesure d'au moins un paramètre de fonctionnement de la centrale,
- déplacement d'au moins un miroir de sorte qu'il soit focalisé sur un récepteur différent de celui sur lequel il est focalisé en fonctionnement nominal lorsque le paramètre de fonctionnement de la centrale diffère du paramètre de fonctionnement correspondant en fonctionnement nominal.

11. Procédé de commande de fonctionnement selon la revendication 10, dans lequel le paramètre de fonctionnement est la température de la vapeur en sortie du deuxième récepteur.

12. Procédé de commande de fonctionnement selon la revendication 10 ou 11, dans lequel en phase de démarrage, au moins l'un des deuxièmes miroirs, est focalisé sur au moins un récepteur de vaporisation.

13. Procédé de commande de fonctionnement selon la revendication 12, dans lequel la centrale comportant au moins un deuxième récepteur de vaporisation, disposé de manière directement adjacente au premier récepteur de surchauffe, ledit procédé comportant en phase de démarrage une étape de focalisation sur le deuxième récepteur de vaporisation d'au moins un premier miroir, qui est focalisé sur le premier récepteur de vaporisation en fonctionnement nominal,

14. Procédé de commande de fonctionnement selon l'une des revendications 10 à 13, dans lequel, lorsque la température de la vapeur en sortie du récepteur de surchauffe est inférieure à une température nominale, au moins un des premiers miroirs est focalisé sur le récepteur de surchauffe.

## Patentansprüche

1. Fresnel-Konzentrations-Solarkraftwerk, enthaltend zumindest ein Elementarmodul, das zumindest einen ersten Receiver (2) und zumindest einen zweiten Receiver (4) enthält, die parallel zueinander und direkt aneinander angrenzend angeordnet sind, sowie Spiegel (8.1, 8.2), die dazu bestimmt sind, einen konzentrierten solaren Strahlungsfluss auf den ersten (2) und den zweiten (4) Receiver zu reflektieren, wobei der erste (2) und der zweite (4) Receiver über den Spiegeln (8.1, 8.2) aufgehängt sind, wobei jeder aus erstem (2) und zweitem (4) Receiver zumindest eine Leitung aufweist, in der ein Fluid zirkulieren soll, wobei die Leitungen dazu bestimmt sind, den reflektierten, konzentrierten solaren Strahlungsfluss aufzunehmen, wobei die Spiegel (8.1, 8.2) erste Spiegel (8.1), die bei Nominalbetrieb auf den ersten Receiver (2) fokussiert sind, und zweite Spiegel (8.2) enthalten, die bei Nominalbetrieb auf den zweiten Receiver (4) fokussiert sind, sowie Verlagerungseinrichtungen zum Verlagern der Spiegel, erste Steuereinrichtungen zum Steuern der Verlagerungseinrichtungen, die die Verlagerungseinrichtungen zum Verlagern der Spiegel je nach Tageszeit betätigen, wobei der erste Receiver (2), Verdampfungsreceiver genannt, mit einer Versorgung mit Fluid in Flüssigphase verbunden ist, und wobei der zweite Receiver (4), Überhitzungsreceiver genannt, über den ersten Receiver (2) mit Fluid in Form von Dampf versorgt wird, wobei der zweite Receiver (4) dazu bestimmt ist, überhitzten Dampf abzugeben, wobei das Kraftwerk auch Messeinrichtungen zum Messen von zumindest einem Betriebsparameter des Kraftwerks und zweite Steuereinrichtungen zum Steuern der Verlagerungseinrichtungen aufweist, wobei die zweiten Steuereinrichtungen die Verlagerungseinrichtungen in Abhängigkeit von zumindest einem Betriebsparameter des Kraftwerks betätigen, so dass zumindest ein Spiegel (8.1, 8.2) auf einen Receiver (2, 4) fokussiert ist, der sich von dem unterscheidet, auf den er im Nominalbetrieb fokussiert ist.

2. Solarkraftwerk nach Anspruch 1, wobei die Temperatur des Dampfs am Auslass des Überhitzungsreceivers einer der Betriebsparameter des Kraftwerks ist.

3. Solarkraftwerk nach Anspruch 1 oder 2, enthaltend zumindest zwei Verdampfungsreceiver (2.1; 2.1'), die beiderseits des Überhitzungsreceivers (4) angeordnet sind, wobei die beiden Verdampfungsreceiver parallel mit einer Flüssigfluidversorgung verbunden sind und den Verdampfungsreceiver versorgen, wobei die zweiten Steuereinrichtungen dazu geeignet sind, einen Teil der zweiten Spiegel (8.1, 8.1') auf einen der Verdampfungsreceiver (2.1, 2.1') und einen Teil der ersten Spiegel (8.1, 8.1') auf den anderen Verdampfungsreceiver (2.1', 2.1) zu fokussieren.

4. Solarkraftwerk nach Anspruch 3, wobei die zweiten Steuereinrichtungen dazu geeignet sind, zumindest einen Teil der ersten Spiegel (8.1, 8.1'), die auf einen der Verdampfungsreceiver (2.1, 2.1') fokussiert sind, auf den anderen Verdampfungsreceiver (2.1', 2.1) zu fokussieren.

5. Solarkraftwerk nach einem der Ansprüche 1 bis 4, enthaltend parallel verlaufende Spiegelreihen, die sich über die gesamte Länge des Kraftwerks erstrecken, wobei die Verlagerungseinrichtungen derart sind, dass die Spiegel einer gleichen Reihe über die ersten Steuereinrichtungen bzw. die zweiten Steuereinrichtungen gleichzeitig verlagert werden.

6. Solarkraftwerk nach einem der Ansprüche 1 bis 5, enthaltend Trenneinrichtungen (6) zum Trennen von Flüssigkeit und Dampf, die den Auslass von zumindest einem Verdampfungsreceiver und den Überhitzungsreceiver verbinden.

7. Solarkraftwerk nach einem der Ansprüche 1 bis 6, enthaltend eine Mehrzahl von nebeneinandergeordneten Elementarmodulen, wobei jedes Elementarmodul einen Überhitzungsreceiver und n Verdampfungsreceiver enthält, wobei n zumindest gleich 1 ist.

8. Solarkraftwerk nach Anspruch 7, wobei jedes Elementarmodul einen Überhitzungsreceiver und 2, 3 oder mehr Verdampfungsreceiver enthält, die beiderseits des Überhitzungsreceivers verteilt sind.

9. Anordnung zum Erzeugen von Elektrizität, enthaltend ein Solarkraftwerk nach einem der Ansprüche 1 bis 8 und eine Dampfturbine (T), die über den bzw. die Überhitzungsreceiver (4) mit Dampf versorgt wird und den bzw. die Verdampfungsreceiver (2, 2.1, 2.1') mit Fluid in Flüssigphase versorgt.

10. Verfahren zum Steuern des Betriebs eines Fresnel-Konzentrations-Solarkraftwerks nach einem der Ansprüche 1 bis 8, umfassend die Schritte:
- Messen zumindest eines Betriebsparameters des Kraftwerks,
- Verlagern zumindest eines Spiegels, derart, dass er auf einen Receiver fokussiert wird, der sich von dem unterscheidet, auf den er im Nominalbetrieb fokussiert ist, wenn der Betriebsparameter des Kraftwerks sich von dem entsprechenden Betriebsparameter im Nominalbetrieb unterscheidet.

11. Betriebssteuerungsverfahren nach Anspruch 10, wobei der Betriebsparameter die Temperatur des Dampfs am Auslass des zweiten Receivers ist.

12. Betriebssteuerungsverfahren nach Anspruch 10 oder 11, wobei in der Anlaufphase zumindest einer der zweiten Spiegel auf zumindest einen Verdampfungsreceiver fokussiert wird.

13. Betriebssteuerungsverfahren nach Anspruch 12, wobei das Kraftwerk zumindest einen zweiten Verdampfungsreceiver enthält, der direkt angrenzend an den ersten Überhitzungsreceiver angeordnet ist, wobei das Verfahren in der Anlaufphase einen Schritt des Fokussierens von zumindest einem ersten Spiegel auf den zweiten Verdampfungsreceiver umfasst, der im Nominalbetrieb auf den ersten Verdampfungsreceiver fokussiert ist.

14. Betriebssteuerungsverfahren nach einem der Ansprüche 10 bis 13, wobei dann, wenn die Temperatur des Dampfs am Auslass des Überhitzungsreceivers geringer als eine Nominaltemperatur ist, zumindest einer der ersten Spiegel auf den Überhitzungsreceiver fokussiert wird.

## Claims

1. Solar concentrator power station of the Fresnel type comprising at least one elementary module including at least one first receiver (2) and at least one second receiver (4) arranged in parallel with each other and directly adjacent, and mirrors (8.1, 8.2) intended to reflect a solar flux concentrated on said first (2) and second (4) receivers, said first (2) and second (4) receivers being suspended above mirrors (8.1, 8.2), each of said first (2) and second (4) receivers comprising at least one conduit in which a fluid is intended to circulate, said conduits being intended to receive the reflected concentrated solar flux, said mirrors (8.1, 8.2) comprising first mirrors (8.1) focused on the first receiver (2) during nominal operation and the second mirrors (8.2) being focused on the second receiver (4) during nominal operation, mirror movement means, first means of controlling the movement means activating the mirror movement means as a function of the time of day, in which the first receiver (2), called vaporizing receiver, is connected to a supply of fluid in liquid phase, and in which the second receiver (4), called superheating receiver, is supplied with fluid in vapour form by the first receiver (2), said second receiver (4) being intended to deliver superheated vapour, said power station also comprising means for measuring at least one operating parameter of the power station, second means of controlling the movement means, said second control means activating the movement means as a function of at least one operating parameter of the power station so that at least one mirror (8.1, 8.2) is focused onto a different receiver (2, 4) from the receiver on which it is focused during nominal operation.

2. Solar power station according to claim 1, in which the temperature of the vapour at the outlet of the superheating receiver is one of the operating parameters of the power station.

3. Solar power station according to claim 1 or 2, comprising at least two vaporizing receivers (2.1; 2.1') arranged on either side of the superheating receiver (4), the two vaporizing receivers being connected in parallel to a supply of liquid fluid and supplying the vaporizing receiver, the second control means being able to focus a part of the second mirrors (8.1, 8.1') on one of the vaporizing receivers (2.1, 2.1') and a part of the first mirrors (8.1, 8.1') on the other vaporizing receiver (2.1', 2.1).

4. Solar power station according to claim 3, in which the second control means are able to focus at least a part of the first mirrors (8.1, 8.1') focused on one of the vaporizing receivers (2.1, 2.1') to the other vaporizing receiver (2.1', 2.1).

5. Solar power station according to one of claims 1 to 4, comprising parallel lines of mirrors extending over the whole length of the power station, the movement means being such that the mirrors of a same line are moved simultaneously by the first control means or the second control means.

6. Solar power station according to one of claims 1 to 5, comprising liquid-vapour separation means (6) connecting the outlet of at least one vaporizing receiver and the superheating receiver.

7. Solar power station according to one of claims 1 to 6, comprising a plurality of juxtaposed elementary modules, each elementary module comprising a superheating receiver and n vaporizing receivers, n being equal to at least 1.

8. Solar power station according to claim 7, in which each elementary module comprises a superheating receiver and 2, 3 or more vaporizing receivers spread out on either side of the superheating receiver.

9. Electricity production assembly comprising a solar power station according to one of claims 1 to 8 and a vapour turbine (T) supplied with vapour by the superheating receiver(s) (4) and supplying the vaporizing receiver(s) (2, 2.1, 2.1') with fluid in liquid phase.

10. Method for controlling the operation of a solar concentrator power station of the Fresnel type according to one of claims 1 to 8, comprising the steps of:
- measuring at least one operating parameter of the power station,
- moving at least one mirror so that it is focused on a receiver different to that on which it is focused during nominal operation when the operating parameter of the power station differs from the corresponding operating parameter during nominal operation.

11. Method for controlling operation according to claim 10, in which the operating parameter is the temperature of the vapour at the outlet of the second receiver.

12. Method for controlling operation according to claim 10 or 11, in which in the start-up phase, at least one of the second mirrors is focused on at least one vaporizing receiver.

13. Method for controlling operation according to claim 12, in which the power station comprising at least one second vaporizing receiver, arranged in a manner directly adjacent to the first superheating receiver, said method comprising in start-up phase a step of focusing on the second vaporizing receiver at least one first mirror, which is focused on the first vaporizing receiver during nominal operation.

14. Method for controlling operation according to one of claims 10 to 13, in which, when the temperature of the vapour at the outlet of the superheating receiver is below a nominal temperature, at least one of the first mirrors is focused on the superheating receiver.
